(19) Europäisches Patentamt

European Patent Office

Office européen des brevets

(11) **EP 1 476 338 B1**

(12) **FASCICULE DE BREVET EUROPEEN**

(45) Date de publication et mention
de la délivrance du brevet:
**10.05.2006 Bulletin 2006/19**

(21) Numéro de dépôt: **03704558.0**

(22) Date de dépôt: **06.02.2003**

(51) Int Cl.:
**B60T 8/00** (2006.01)

(86) Numéro de dépôt international:
**PCT/EP2003/001175**

(87) Numéro de publication internationale:
**WO 2003/066399 (14.08.2003 Gazette 2003/33)**

(54) **DETERMINATION DIRECTE DU COEFFICIENT D'ADHERENCE MAXIMAL A PARTIR DE LA MESURE DE L'EXTENSION CIRCONFERENTIELLE DANS UN FLANC D'UN PNEU**

MAXIMALREIBWERTERMITTLUNG ANHAND DER MESSUNG DER UMFANGAUSDEHNUNG IN EINER REIFENSEITENWAND

DIRECT DETERMINATION OF MAXIMUM FRICTION COEFFICIENT BASED ON MEASUREMENT OF THE CIRCUMFERENTIAL EXTENSION IN A TYRE SIDEWALL

(84) Etats contractants désignés:
**AT BE BG CH CY CZ DE DK EE ES FI FR GB GR HU IE IT LI LU MC NL PT SE SI SK TR**

(30) Priorité: **08.02.2002 FR 0201594**

(43) Date de publication de la demande:
**17.11.2004 Bulletin 2004/47**

(73) Titulaires:
• **Société de Technologie Michelin**
**63000 Clermont-Ferrand Cedex 09 (FR)**
• **MICHELIN RECHERCHE ET TECHNIQUE S.A.**
**1763 Granges-Paccot (CH)**

(72) Inventeur: **BERTRAND, David**
**F-63400 Chamalières (FR)**

(74) Mandataire: **Bauvir, Jacques**
**Michelin & Cie,**
**Service SGD/LG/PI Ladoux**
**63040 Clermont-Ferrand Cedex 01 (FR)**

(56) Documents cités:
**EP-A- 0 937 615          WO-A-01/92078**
**DE-C- 19 646 235          FR-A- 2 797 496**

## Description

La présente invention se rapporte à l'évaluation de l'adhérence d'un véhicule sur une chaussée. Elle concerne plus particulièrement la détermination de caractéristiques d'adhérence entre la chaussée et une roue de véhicule, équipée d'un bandage élastique tel qu'un pneu gonflé ou un bandage élastique non pneumatique qui roule sur la chaussée, telle que décrite par example dans le document EP 0 937 615.

La présente invention concerne aussi les divers dispositifs d'assistance électronique utilisés par exemple pour la régulation antiblocage des freins d'un véhicule ou la régulation anti-patinage des roues motrices, le contrôle de trajectoire d'un véhicule ou encore pour d'autres formes de contrôle ou de surveillance comme la pression des pneus. On sait que de tels dispositifs reconstruisent par calcul le coefficient d'adhérence ($\mu$) des pneus sur la chaussée, sans avoir procédé à la moindre mesure ni du coefficient d'adhérence ni des efforts développés dans le contact des pneus au sol. Même si ces dispositifs apportent une assistance remarquable et un surcroît de sécurité, leur fonctionnement gagnerait beaucoup à utiliser une valeur mesurée, ou estimée à partir de mesures réelles effectuées sur le pneu en fonctionnement.

C'est pourquoi l'objectif de la présente invention est de proposer une évaluation de l'adhérence d'un véhicule sur une chaussée, plus précisément de ses roues ou pneus ou bandages élastiques, termes considérés comme équivalents dans le contexte de la présente invention. Elle concerne plus particulièrement la détermination de caractéristiques d'adhérence entre la chaussée et une roue de véhicule, équipée d'un bandage élastique tel qu'un pneu gonflé ou un bandage élastique non pneu qui roule sur la chaussée.

Les divers dispositifs d'assistance électronique évoqués ci-dessus profiteraient donc utilement d'indications « en temps réel » sur les conditions d'adhérence susceptibles d'affecter le comportement d'un véhicule, notamment dans le cas où il subit une accélération par effort moteur ou par effort freineur ou par changement de direction de déplacement. L'invention vise à fournir une méthode d'y parvenir de manière efficace.

Dans ce qui suit, on entend par « potentiel d'adhérence maximum » le rapport entre l'effort tangentiel maximal (transversal ou longitudinal ou les deux combinés) et l'effort normal que la roue peut subir. Dans le texte, on le désigne aussi par le terme « coefficient d'adhérence maximal » ou la lettre $\mu$.

On entend par «efforts globaux » les trois composantes de forces Fx, Fy et Fz appliquées au centre de la roue et le couple d'auto-alignement N autour de l'axe Z.

Dans le but d'estimer le potentiel d'adhérence maximum, il a été proposé d'équiper la bande de roulement d'un pneu, ou certains éléments de la bande de roulement spécialement adaptés, de capteurs destinés à mesurer ou à estimer les efforts générés localement, en particulier en conditions de glissement. Ces approches, quoique fort prometteuses, présentent néanmoins certaines difficultés intrinsèques. Il est en effet difficile de garantir le bon fonctionnement d'un capteur dans cette zone du pneu, en particulier avec l'usure de la bande de roulement, pendant toute la vie du pneu. De plus, les estimations fournies par ces capteurs sont très locales et sensibles à l'état de surface de la chaussée.

Or comme on cherche en fait à estimer le potentiel d'adhérence maximum de la roue, il faut encore le déterminer à partir du potentiel local mesuré.

L'invention détaillée ici se distingue de ces approches locales. Elle propose d'utiliser une mesure des déformations globales du pneu de manière à obtenir une information sur le potentiel d'adhérence maximum de la roue sur le sol. En effet, lorsque le pneu est soumis à une sollicitation, le point d'application des forces appliquées dans l'aire de contact dépend entre autre du coefficient d'adhérence maxi parce que, dès qu'une partie de l'aire de contact de la roue sur la chaussée est en glissement, sa contribution aux efforts tangentiels est saturée à un niveau qui dépend du coefficient d'adhérence. Les déformations du pneu sont elles mêmes sensibles au déplacement de ce point d'application. En particulier, l'extension circonférentielle des flancs, sensible aux efforts appliqués, est aussi sensible au déplacement du point d'application des forces dans l'aire de contact.

La méthode proposée utilise des mesures des déformations circonférentielles du flanc en certains azimuts du pneu pour permettre une estimation du coefficient d'adhérence maxi.

Pour fournir une bonne estimation de $\mu$, la méthode nécessite qu'il existe une zone de glissement dans l'aire de contact, qu'elle soit créée par une conception spéciale du pneu ou par un niveau suffisant de sollicitation appliqué au pneu. De manière à obtenir une information fiable même en cas de faible glissement, l'invention propose d'estimer, en plus du potentiel d'adhérence maximal, le pourcentage de potentiel utilisé. Cette grandeur présente en effet l'avantage d'être plus facilement estimée en valeur absolue même pour des sollicitations faibles.

La méthode selon l'invention, pour la détermination du coefficient d'adhérence $\mu$ dans l'aire de contact d'un pneu sur une chaussée, comporte les étapes suivantes :

- sélectionner plusieurs points fixes dans l'espace, situés à des azimuts différents le long de la circonférence dans au moins un flanc du pneu,
- effectuer autant de mesures de variation de distance circonférentielle (extension ou contraction) à ces points fixes lorsque le pneu roule sur la chaussée et l'on traite les signaux de mesure de façon à en extraire ledit coefficient d'adhérence $\mu$.

Avantageusement, ledit coefficient d'adhérence $\mu$ est déduit d'au moins 5 mesures de variation de distance circonférentielle (extension ou contraction) effectuées dans au moins un flanc du pneu, en 5 points fixes dans l'espace (c'est à dire fixes dans le repère lié au véhicule), situés à des azimuts différents le long de la circonférence.

La méthode de l'invention est basée sur la constatation du fait que les efforts agissant entre la bande de roulement du pneu et la chaussée ainsi que leur répartition dans l'aire de control provoquent une déformation sensible et reproductible sous forme d'une extension ou contraction circonférentielle des flancs des pneus. Cette déformation d'extension ou de contraction circonférentielle, si l'on parvient à la mesurer isolément lors de la rotation du pneu en temps réel, peut permettre de connaître à chaque instant le sens et l'intensité des efforts agissant sur le pneu ainsi que le signe et l'intensité du couple d'auto-alignement exercé par le pneu et le coefficient d'adhérence du pneu sur la chaussée.

Sous un aspect particulier mais intéressant, l'invention propose d'estimer la contraction ou l'extension circonférentielle des flancs par la mesure de la distance entre les fils de la nappe carcasse dans les flancs. On peut aussi mesurer la distance entre des fils (par exemple deux) placés dans les flancs et qui subissent des mouvements corrélés à ceux des fils de la nappe carcasse. On parlera dans la suite de la mesure de « l'écart entre les fils ». Notons que si cette dénomination est liée à la structure radiale d'un pneu la méthode ne s'applique pas uniquement aux pneus à carcasse radiale. Ainsi, on parlera « d'écart fils » pour désigner la distance moyenne entre deux tracés réalisés sur le flanc à des azimuts voisins mais différents.

Notons que dans le cas où la mesure de l'extension circonférentielle des flancs est réalisée dans l'épaisseur des flancs à un endroit différent de leur fibre neutre en flexion, l'extension circonférentielle inclut une composante due à la flexion du flanc, notamment lors du passage dans l'aire de contact (phénomène aussi appelé « ventre de lapin »). Cette composante due à la flexion n'est en aucun cas un problème et peut être mise à profit pour augmenter la dynamique de variation des signaux utilisés par l'invention en réalisant la mesure d'extension ailleurs que sur la fibre neutre en flexion.

La suite de la description explique plus en détails l'invention à l'aide des figures jointes dans lesquelles :

la figure 1 est une perspective d'un pneu sur lequel on définit des conventions utiles à l'intelligence de l'invention ;
les figures 2a et 2b montrent l'effet de la composante verticale Fz :

- où la courbe pleine correspond à une charge verticale de 400 daN,
- où la courbe en pointillés correspond à une charge verticale de 500 daN,
- où la courbe en trait mixte correspond à une charge verticale de 300 daN ;

les figures 3a et 3b montrent l'effet de la composante Fx :

- où la courbe pleine correspond à une charge verticale de 400 daN, et en l'absence de force Fx,

- où la courbe en pointillés correspond à une charge verticale de 400 daN et une force Fx de 400 daN (force motrice),

- où la courbe en trait mixte correspond à une charge verticale de 400 daN et une force Fx de - 400 daN (force freineuse) ;

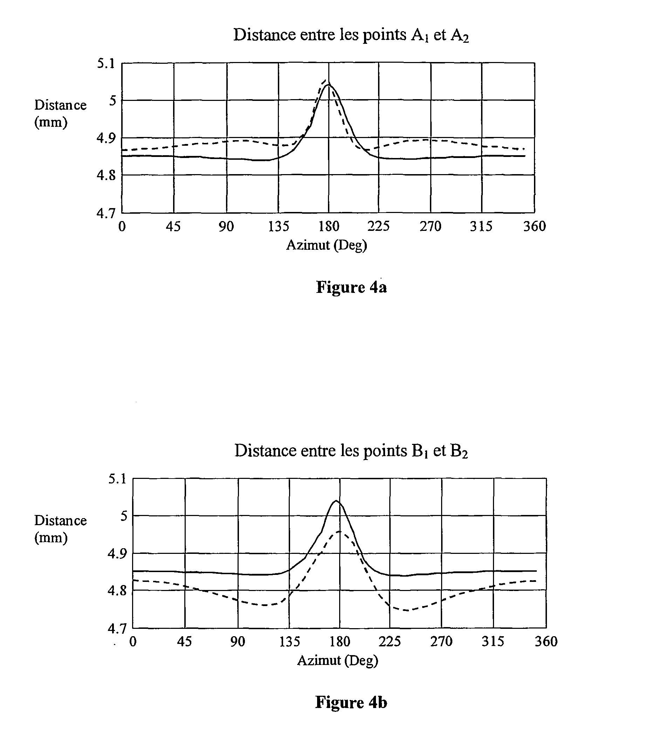

les figures 4a et 4b montrent l'effet de la composante Fy :

- où la courbe pleine correspond à une charge verticale de 400 daN sans effort Fy,

- où la courbe en pointillés correspond à une charge verticale de 400 daN avec un effort Fy de 280 daN ;

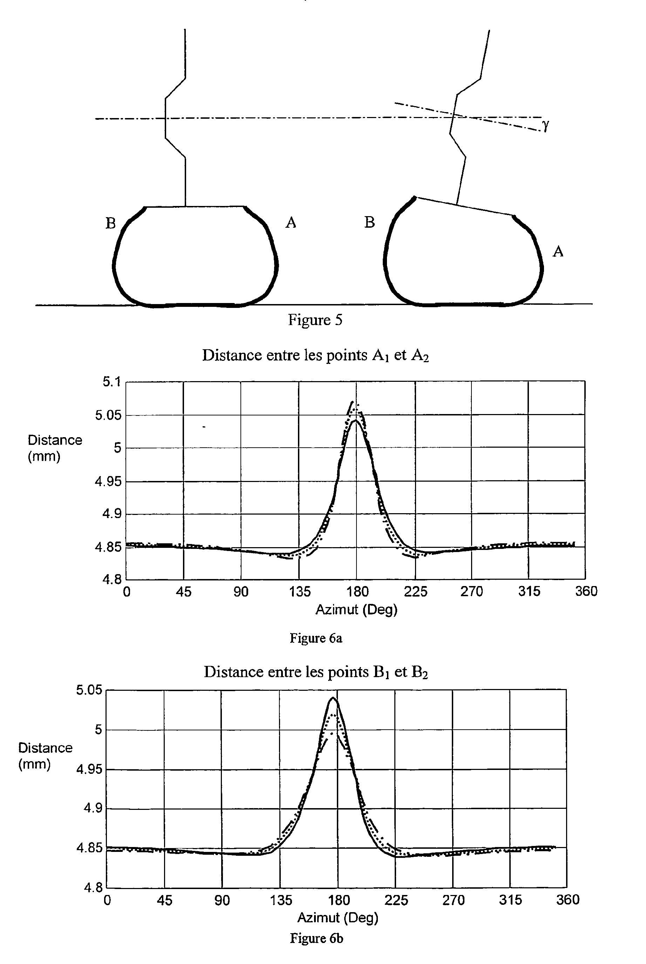

la figure 5 montre la déformation du pneumatique lorsqu'un angle de carrossage est appliqué,
les figures 6a et 6b montrent l'effet du carrossage sur les signaux de déformation circonférentielle :

- où la courbe pleine correspond à une charge verticale de 400 daN sans effort Fx et Fy et à un angle de carrossage nul,
- où la courbe en pointillés correspond à une charge verticale de 400 daN avec un angle de carrossage de 2°,
- où la courbe en traits mixtes correspond à une charge verticale de 400 daN avec un angle de carrossage de 4° ;

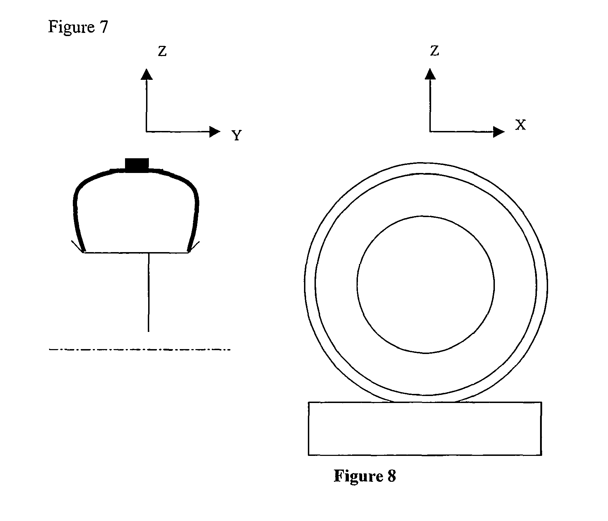

la figure 7 est une vue de face d'un pneu schématique permettant d'expliquer l'invention ;
la figure 8 est une vue de côté d'un pneu schématique permettant d'expliquer l'invention ;

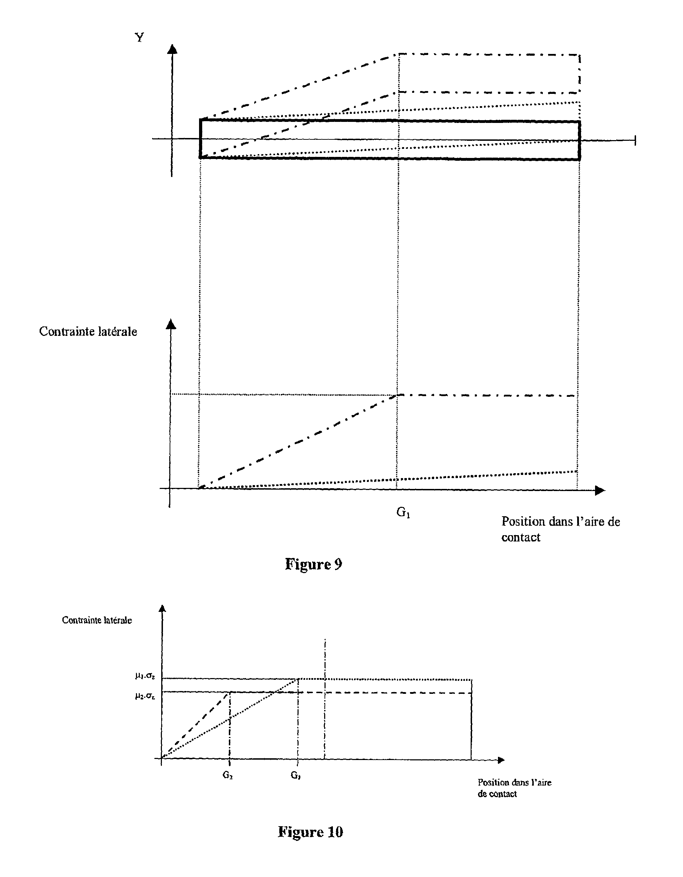

la figure 9 illustre le cisaillement d'une nervure dans l'aire de contact, ainsi que les contraintes associées ;
la figure 10 illustre l'effet du coefficient de frottement sur la répartition des efforts ;

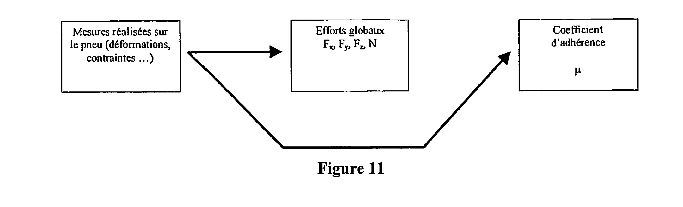

la figure 11 est un bloc diagramme de l'estimation de μ à partir des mesures de déformation :

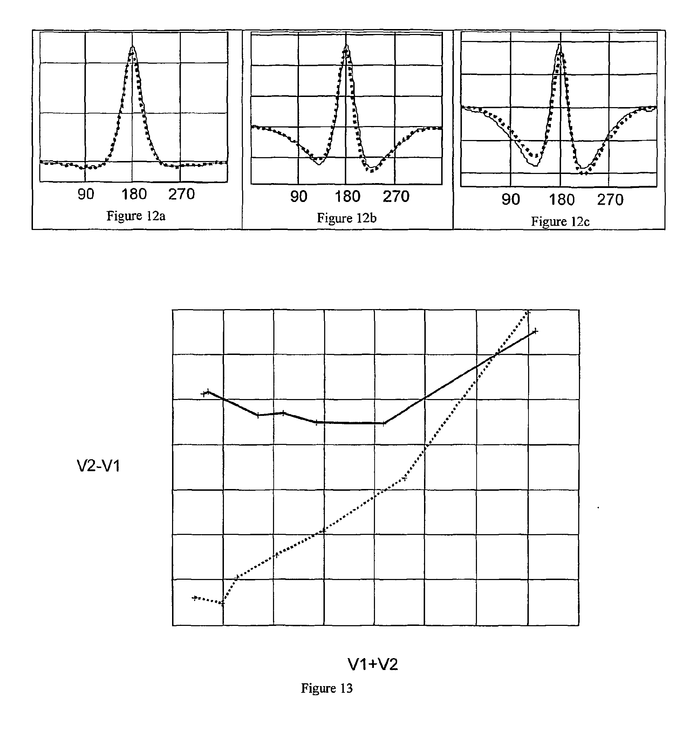

les figures 12a, 12b et 12c illustrent les effets du niveau d'adhérence maxi sur les signaux d'extension circonférentielle respectivement pour une force Fy de 0, 80 et 120 daN avec une charge de 400 daN et sans couple moteur ou freineur. La courbe pleine correspond à un coefficient d'adhérence maxi de 0.4 et la courbe en pointillés à coefficient d'adhérence de 1 ;

la figure 13 montre le lien différent qui existe entre les deux indicateurs V1+V2 et V2-V1 suivant la valeur du coefficient d'adhérence. La courbe pleine correspond à un coefficient d'adhérence de 0.4 et la courbe pointillée à un coefficient de 1.

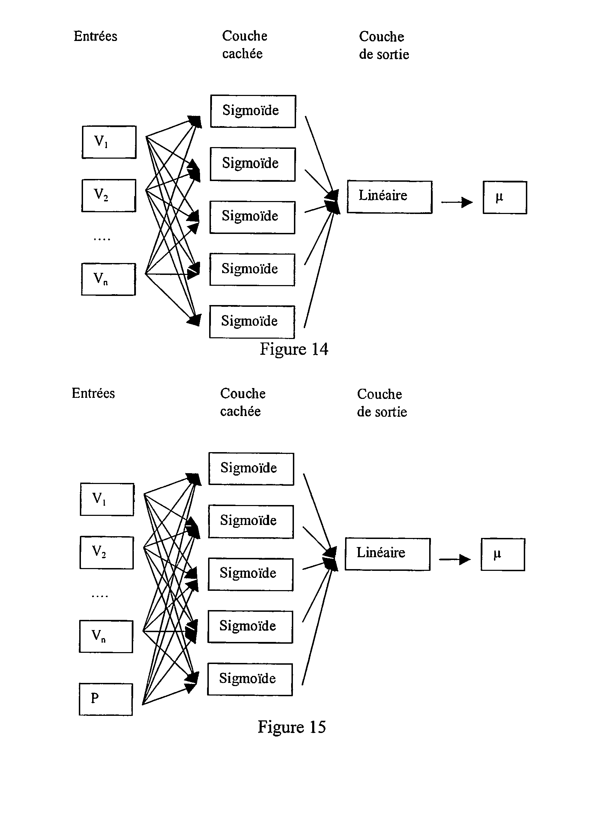

la figure 14 montre l'architecture de réseau de neurones ;

la figure 15 montre l'architecture de réseau de neurones utilisant la pression de gonflage comme entrée supplémentaire ;

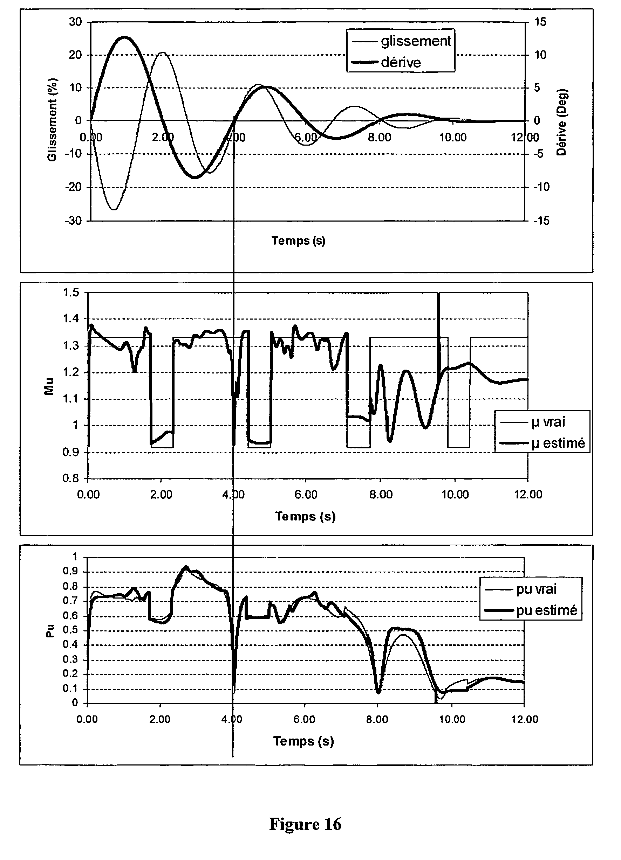

la figure 16 donne les résultats de l'estimation de $\mu$ et du pourcentage du potentiel d'adhérence utilisé.

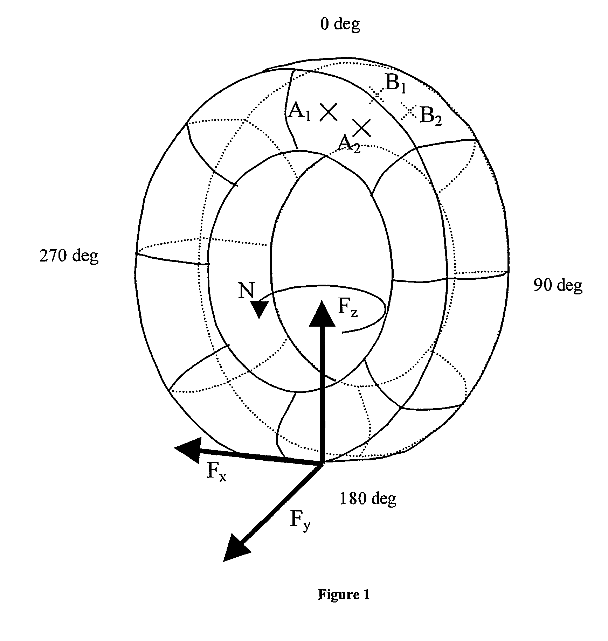

La méthode décrite ici s'appuie sur le fait que chaque force appliquée au pneu dans l'aire de contact provoque une modification de l'extension circonférentielle des flancs du pneu. Considérons le cas d'un pneu monté sur sa roue et gonflé sur le premier flanc duquel on repère (figure 1) deux points $A_1$ et $A_2$ placés sur un même rayon mais séparés dans la direction circonférentielle. Sur le second flanc, aux mêmes azimuts que $A_1$ et $A_2$ et sur le même rayon, on choisit deux points $B_1$ et $B_2$. En l'absence de forces appliquées sur le pneu, la distance qui sépare les deux points est constante en fonction de l'angle de rotation de l'ensemble monté. Définissons l'azimut $\theta$ comme l'angle auquel on analyse l'extension circonférentielle des flancs. L'origine de l'azimut est prise à l'opposé du centre de l'aire de contact. Le centre de l'aire de contact a donc l'azimut 180°.

Lorsque le pneu est soumis à des forces, on observe les effets suivants pour chacune des composantes desdites forces :

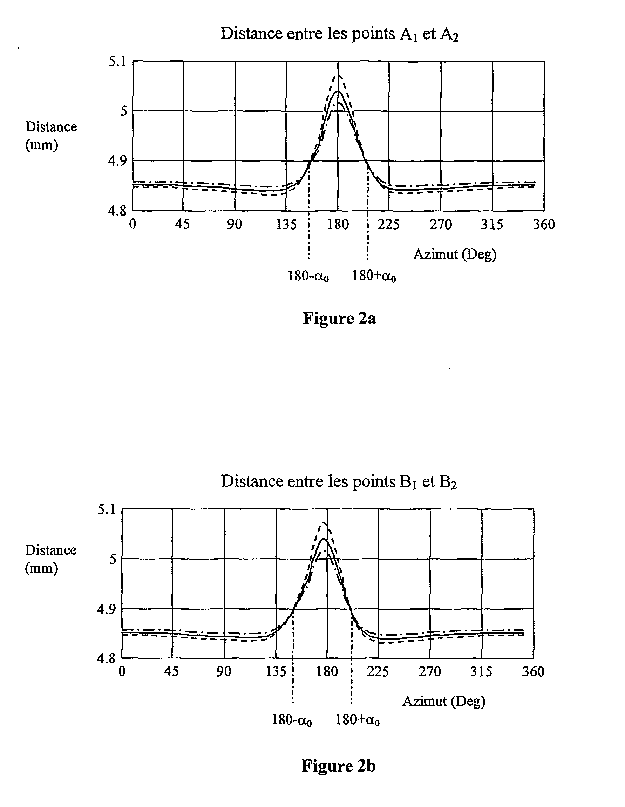

• La composante verticale (dénommée Fz) plaque le pneu sur le sol. En créant une aire de contact, elle entraîne une variation de la distance entre les deux points $A_1$ et $A_2$ lorsque le pneu est en rotation, traduisant une modification de l'extension circonférentielle des flancs. Les figures 2a et 2b indiquent la distance qui sépare, respectivement les points A et les points B, en fonction de l'azimut auquel ils se trouvent. L'augmentation de la composante verticale appliquée entraîne une extension des deux flancs dans l'aire de contact (l'extension due à la composante verticale est maximale vers l'azimut 180°) et une contraction des autres zones du flanc, principalement en entrée et en sortie de l'aire de contact (diminution de la distance partout ailleurs, principalement vers 135° et 225°). Cette évolution est une conséquence de l'augmentation de la flèche du pneu ou de la translation de l'aire de contact suivant l'axe Oz vers l'axe de rotation de la roue.

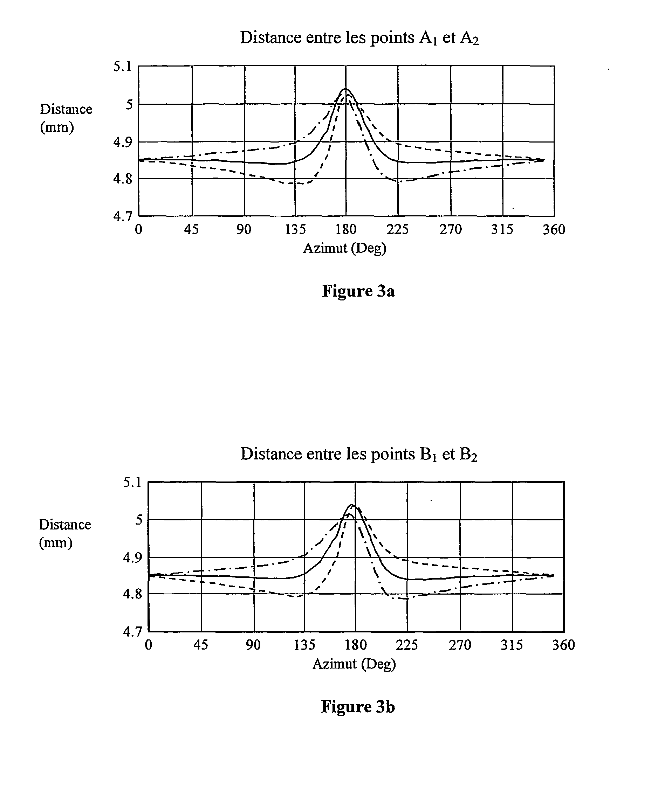

• La composante horizontale dans la direction de roulage (dénommée Fx) provoque une différentiation des zones situées en entrée et en sortie de l'aire de contact. Ceci se traduit par une évolution de l'extension des flancs essentiellement en entrée et en sortie de l'aire de contact. Les figures 3a et 3b illustrent les effets de la composante Fx des forces appliquées, en indiquant la distance qui sépare, respectivement les points A et les points B, en fonction de l'azimut auquel ils se trouvent. Lorsqu'une force Fx positive est appliquée (couple moteur), les deux flancs sont comprimés dans la direction circonférentielle en entrée d'aire de contact et en extension en sortie d'aire de contact (Diminution de la distance environ vers 135° et augmentation environ vers 225°). Lorsqu'une force Fx négative est appliquée (couple freineur), les deux flancs sont comprimés dans la direction circonférentielle en sortie d'aire de contact et en extension en entrée (Diminution de la distance vers 225° et augmentation vers 135°). Cette évolution des signaux traduit le déplacement d'avant en arrière de l'aire de contact par rapport à l'axe de rotation, c'est à dire une translation suivant l'axe Ox.

• La composante horizontale dans la direction transverse (dénommée Fy) provoque principalement une différenciation des deux flancs. Les figures 4a et 4b illustrent les effets de ce type de sollicitation, en indiquant la distance qui sépare, respectivement les points A et les points B, en fonction de l'azimut auquel ils se trouvent. Dans le cas d'une sollicitation avec Fy positif, l'un des flancs est principalement mis en extension circonférentielle (augmentation de la distance entre $A_1$ et $A_2$) et l'autre flanc est mis en contraction circonférentielle (diminution de la distance entre $B_1$ et $B_2$). Cette évolution des signaux traduit le déplacement latéral (déport) de l'aire de contact, c'est à dire une translation suivant l'axe Oy.

Le couple d'auto-alignement N (moment autour de l'axe vertical) n'est pas à proprement parler un autre effort agissant entre la bande de roulement du pneu et la chaussée. Il s'agit plutôt d'une conséquence de la façon dont les composantes Fx, Fy et Fz sont appliquées dans l'aire de contact. Si le point d'application de la résultante ayant pour composantes Fx, Fy et Fz n'est pas le centre de l'aire de contact, cette résultante génère un moment autour de Oz que l'on appelle couple d'auto-alignement. La présence de ce moment se traduit principalement par une rotation de l'aire de contact autour de Oz. Cet effet a pour conséquence par exemple une extension circonférentielle en entrée d'aire de contact et une contraction circonférentielle en sortie d'aire de contact sur un flanc alors que sur l'autre flanc on observe une contraction circonférentielle en entrée d'aire de contact et une extension circonférentielle en sortie d'aire de contact par rapport à une situation à couple d'auto-alignement nul.

Lorsque qu'une sollicitation qui mêle des composantes Fx, Fy et Fz est appliquée, on observe une superposition des déformations globales et donc des effets énoncés précédemment sur l'extension dans la direction circonférentielle. Un des avantages de la méthode proposée est de permettre une séparation des contributions de chaque composante de la sollicitation appliquée, de manière à permettre une estimation de chacune de ces composantes.

Dans le cas où un angle de carrossage est appliqué au pneumatique, les comportements des deux flancs se distinguent. De manière simplifiée, tout se passe comme si un flanc porte plus de charge que l'autre. La figure 5 illustre ce fonctionnement en comparant une section de la partie du pneu dans l'aire de contact sans carrossage et avec un carrossage γ. Il en résulte aussi un léger déplacement latéral de l'aire de contact qui se traduit par une poussée dans la direction Y. Les figures 6a et 6b montrent l'évolution de la déformation circonférentielle dans les deux flancs. Sur le flanc surchargé (Points A), l'évolution est semblable à celle d'une augmentation de la charge. Sur l'autre flanc (Points B), on constate une évolution compatible avec une diminution de la charge portée. Cette évolution des signaux correspond à une rotation de l'aire de contact autour de l'axe Ox.

Avant de poursuivre, notons que le signal d'extension en fonction de l'azimut $s(\theta)$ peut se décomposer en deux signaux $s_p(\theta)$ et $s_i(\theta)$ tels que :

$$s(\theta) = s_p(\theta) + s_i(\theta)$$

$$s_i(\theta) = -s_i(-\theta)$$

$$s_p(\theta) = s_p(-\theta),$$

où $s_i$ est appelé partie impaire et $s_p$ partie paire du signal s.

De même, soient $s^1(\theta)$ et $s^2(\theta)$ les signaux associés à la mesure de l'extension circonférentielle sur cliacun des flancs du pneu et $S_p^1$, $S_i^1$, $S_p^2$, $S_i^2$ leurs décompositions en partie paire et impaire en azimut. On définit :

$$s_p^p(\theta) = \frac{s_p^1(\theta) + s_p^2(\theta)}{2}$$

$$s_p^i(\theta) = \frac{s_p^1(\theta) - s_p^2(\theta)}{2}$$

$$s_i^p(\theta) = \frac{s_i^1(\theta) + s_i^2(\theta)}{2}$$

$$s_i^i(\theta) = \frac{s_i^1(\theta) - s_i^2(\theta)}{2}$$

$s_p^p$ est appelée partie paire en flanc et paire en azimut.
$s_p^i$ est appelée partie impaire en flanc et paire en azimut.
$s_i^p$ est appelée partie paire en flanc et impaire en azimut.
$s_i^i$ est appelée partie impaire en flanc et impaire en azimut.

Les efforts Fx, Fy, Fz et le couple d'auto-alignement N sont de par leurs orientations liés à certaines symétries. En particulier, on peut utiliser ce principe pour découpler les effets des composantes efforts sur le pneu.

Fort de ces observations, la méthode explicitée ici propose de réaliser des mesures de l'extension circonférentielle sur au moins un flanc du pneumatique. Ces mesures permettent grâce à des opérations mathématiques (combinaisons linéaires ou non entre les mesures réalisées aux différents azimuts) d'estimer les valeurs des signaux $s_i^p$ $s_p^i$ $s_p^p$ et $s_i^i$ en certains azimuts et par là même de fournir une évaluation des composantes de la force appliquée.

Revenons aux figures 6a et 6b. Vu que l'évolution des signaux est impaire en passant d'un flanc à l'autre et paire en azimuts, il est possible de distinguer simplement un effet du carrossage d'un effet Fx, Fz et N. Les figures 4 et 6 montrent que les conséquences de Fy et du carrossage ne sont pas identiques, on peut donc distinguer translation de l'aire de contact suivant Oy et rotation de l'aire de contact autour de Ox.

La rigidité apparente d'un pneumatique provient à la fois de son fonctionnement pneumatique (de sa pression de gonflage) et de sa rigidité structurelle (rigidité de son architecture). Les signaux de déformation circonférentielle mesurés contiennent eux aussi une composante pneumatique et une composante structurelle. Par exemple, les signaux de déformation d'un pneu gonflé à 2 bars et chargé à 400 daN suivant Z ne sont pas identiques à ceux délivrés par le même pneu à 2.5 bars et chargé à 500 daN. Cette différence correspond à la contribution structurelle et peut permettre d'estimer la pression de gonflage du pneumatique.

Dans le cas où la pression de gonflage varie, les liens qui relient les efforts appliqués et les signaux de déformation sont quantitativement modifiés, mais sans que leur nature ne soit changée. Ainsi, la méthode peut être expliquée d'abord dans le cas d'une pression de gonflage supposée constante dans un but de simplicité. De même, nous considérons dans la suite que le carrossage est constant et nul pour rendre l'explication plus claire et ne mentionnons que les cas les plus intéressants vis à vis de ce paramètre.

L'invention repose sur la remarque suivante : Considérons un pneu simplifié muni d'une nervure unique continue. Les figures 7 et 8 représentent un tel pneu. Dans la zone de l'aire de contact, la nervure est soumise à une contrainte verticale qui la plaque contre le sol. On parle souvent de mise à plat, dans l'empreinte du pneu sur le sol. En l'absence de dérive du pneu, une droite formée par des points de repère pris sur la nervure de façon à ce qu'ils soient alignés dans l'empreinte de contact avec le sol sont ensuite, lors de la rotation du pneu, compris dans un plan qui contient ladite droite définie lorsque les points étaient dans l'empreinte de contact. Si l'on applique un angle de dérive au pneu en roulage, le plan contenant lesdits points de repère lorsqu'ils sont suffisamment éloignés de l'empreinte de contact au sol forme un angle égal à l'angle de dérive avec les points de repère lorsqu'ils sont alignés dans l'empreinte de contact avec le sol. Sur la figure 9, on peut observer en trait plein la nervure vue de dessus sans dérive et en pointillés la nervure avec une dérive imposée. Plus on s'enfonce dans l'aire de contact, plus la nervure est cisaillée et plus la contrainte latérale qui s'applique est grande. Si l'angle de dérive est suffisant, il existe dans l'aire de contact un point $G_1$ où cette contrainte latérale devient supérieure au potentiel d'adhérence maximum $\mu_1$, la nervure se met à glisser. Cette situation est représentée en trait mixte sur la figure 4.

La force latérale $F_{y_1}$ générée par le pneu est égale à l'intégrale dans l'aire de contact de la contrainte latérale.

Si le pneu est placé à un endroit où le potentiel d'adhérence maxi $\mu_2$ est plus faible que $\mu_1$, il est nécessaire d'augmenter l'angle de dérive pour que le pneu génère la même force de poussée Fy. La zone de glissement commence désormais au point $G_2$ plus proche de l'entrée de l'aire de contact. La figure 10 permet de comparer les deux situations.

Entre ces deux configurations, les efforts latéraux sont les mêmes (même aire sous la courbe) mais le point d'application de la force Fy s'est déplacé. Plus le potentiel d'adhérence maxi diminue, c'est à dire plus le coefficient d'adhérence diminue, plus le point d'application de la force latérale se déplace vers l'entrée de l'aire de contact.

Une conséquence est que pour le même effort latéral Fy, les déformations du pneu diffèrent en raison d'un déplacement du point d'application de la force. L'aire de contact est translatée latéralement de la même façon suivant Oy mais elle ne subit pas la même rotation autour de Oz. On va exploiter ces différences de déformation pour estimer le coefficient d'adhérence maxi.

On vient d'établir un lien entre les déformations globales du pneu d'une part, les efforts globaux appliqués au pneu d'autre part et le coefficient d'adhérence maxi. Toutefois, pour disposer d'autant d'informations que possible pour estimer le coefficient d'adhérence sur l'ensemble du domaine de sollicitation, on estime μ directement à partir des mesures de déformation réalisées sur le pneu, sans passer par une estimation des efforts à partir desquels on rechercherait ensuite à estimer μ (figure 11).

En particulier, il est possible d'utiliser la mesure de l'extension circonférentielle des flancs du pneu pour estimer le potentiel d'adhérence maxi. En effet, comme déjà vu précédemment, l'évaluation du potentiel maxi d'adhérence utilise le positionnement du point d'application des forces Fx et Fy. Si la sollicitation est suffisante (existence d'une zone de glissement dans l'aire de contact), ce point d'application se déplace dans l'aire de contact en fonction du potentiel d'adhérence, en provoquant une modification du positionnement géométrique de l'aire de contact et donc une modification de l'extension circonférentielle. La mesure de l'extension circonférentielle des flancs en plusieurs azimuts permet d'obtenir une estimation du coefficient d'adhérence maxi, en procédant à un traitement du signal approprié, comme on va l'expliquer en détails.

Parmi les nombreuses variantes possibles pour la mesure de l'extension circonférentielle, notons les approches suivantes :

■ La mesure de l'extension circonférentielle des flancs par capteur(s) intégrés au(x) flanc(s) du pneu. Un tel capteur tourne avec le pneu, il parcourt donc tous les azimuts et, si l'on sait le positionner, il permet une mesure en tous les azimuts. Il est possible dans ce cas, pour disposer des valeurs d'extension circonférentielle en plusieurs azimuts, d'utiliser une hypothèse de stationnarité des efforts et de μ pendant une portion de tour de roue pour utiliser les valeurs données par un même capteur en différents azimuts (gain sur le nombre de capteurs) ou il est possible de privilégier le temps de réponse et d'équiper le pneu de plusieurs capteurs placés à différents azimuts. Tout panachage est bien sur possible.
■ La mesure de l'extension circonférentielle des flancs par capteur(s) externe(s) au pneu. Dans ce cas, des capteurs externes au pneu observent les flancs et permettent la mesure de l'extension circonférentielle. Il faut a priori autant de capteurs que d'azimuts à observer.

Dans le cas où on emploie un ou des capteurs placés dans le pneu, on peut par exemple estimer la variation circonférentielle par la mesure de la distance entre des fils formant un capteur intégré aux flancs, mesurant une variation de capacité liée à la distance qui sépare deux électrodes.

Définissons l'azimut θ comme l'angle auquel on analyse l'extension circonférentielle des flancs. L'origine de l'azimut est prise à l'opposé du centre de l'aire de contact. Le centre de l'aire de contact a donc l'azimut 180°.

Les figures 12a, 12b et 12c présentent des exemples de l'évolution des signaux d'extension circonférentielle obtenus par un capteur implanté dans le flanc d'un pneumatique. Le pneu porte une charge de 400 daN et n'est soumis à aucun couple moteur ou freineur. La figure 12a correspond à un roulage en ligne droite (Fy=0 daN), la figure 12b à une poussée latérale Fy=80 daN et la figure 12c à une poussée latérale de 120 daN. La courbe pleine présente les signaux obtenus sur un sol de coefficient d'adhérence 0.4 et la courbe en pointillés sur un sol de coefficient d'adhérence 1. Sur cet exemple, nous mettons en évidence un effet du coefficient d'adhérence sur les signaux d'extension circonférentielle.

Dans un but d'explication, considérons les valeurs des signaux aux azimuts correspondant aux minima avant et après le passage par l'azimut 180°. Nous appelons V1 et V2 les valeurs des signaux à ces azimuts. D'après ce que nous avons vu précédemment, V1+V2 est principalement lié à la poussée latérale et donc au déport de l'aire de contact (translation suivant Oy). V2-V1 est un indicateur du couple d'auto-alignement et est donc lié à la rotation de l'aire de contact autour de Oz. La figure 13 représente V2-V1 en fonction de V1+V2 pour différentes poussées latérales, la charge étant imposée à 400 daN et sans couple moteur ou freineur. La courbe pleine correspond à un coefficient d'adhérence de 0.4 et la courbe en pointillés à un coefficient maxi d'adhérence de 1. Cette figure met en évidence qu'il est possible de distinguer le coefficient d'adhérence à partir de V1 et de V2 dans les conditions de roulage considérées.

Dans des cas plus généraux, de manière à capturer convenablement les évolutions de l'extension circonférentielle, les mesures doivent être réalisées en des azimuts bien choisis. En particulier et à titre d'exemple non limitatif, on peut indiquer les cas suivants :

■ Mesure en trois azimuts sur les deux flancs. Un azimut choisi en entrée d'aire de contact (par exemple entre 100° et 150° d'azimut), une mesure à 180° (centre de l'aire de contact) et une mesure en sortie d'aire de contact à l'azimut symétrique de celui utilisé en entrée. Ceci donne un total de six valeurs d'extension circonférentielle à partir desquelles il est possible d'estimer le coefficient d'adhérence maxi.

■ Mesure en sept azimuts sur un unique flanc. Les trois premiers sont situés en entrée d'aire de contact, le quatrième à 180° au centre de l'aire de contact et les trois derniers symétriques des trois premiers par rapport au centre de l'aire de contact.

Pour établir la fonction de transfert entre les mesures d'extension circonférentielle en plusieurs azimuts et le coefficient d'adhérence maxi, on peut par exemple utiliser un réseau de neurones, du type perceptron à une couche cachée, utilisé en tant qu'approximateur. Toute autre fonction mathématique permettant ce type d'approximation est bien sur utilisable. La figure 14 représente une des architectures de réseau permettant de réaliser l'estimation du coefficient d'adhérence maxi. Le réseau de neurones est ici composé d'autant d'entrées que d'azimuts de mesure, d'une couche de neurones cachés à fonction d'activation sigmoïde et d'une couche de sortie linéaire.

De nombreux systèmes de mesure de la pression des pneumatiques en cours d'utilisation sont désormais disponibles et rendent possible la mesure de celle-ci en cours de roulage. Si de tels systèmes sont disponibles, la pression peut être utilisée comme entrée supplémentaire de la fonction de transfert comme indiqué par la figure 15. Bien sur, d'autres grandeurs peuvent être introduites en entrée de la fonction de transfert de manière à en améliorer les performances (par exemple et sans limitation, le carrossage, la vitesse du véhicule ...).

Soit le cas où l'on utilise un réseau de neurones pour réaliser la fonction de transfert. La démarche suivie pour construire la fonction est la suivante :

La première étape consiste à réaliser une base de données contenant les valeurs des extensions circonférentielles aux azimuts choisis (ou toute valeur représentative) qui représenteront les entrées de la fonction de transfert, et contenant μ. Il est possible de construire une telle base de données soit à l'aide d'une machine de mesure (l'avantage est de pouvoir solliciter le pneu par des forces Fx, Fy, Fz indépendantes et de faire varier le coefficient d'adhérence) soit sur véhicule en utilisant par exemple une roue dynamométrique (pour mesurer les efforts) et en roulant sur différents sols.

Dans le cas où l'utilisation future du système doit se faire dans des conditions de carrossage et/ou de pression variable, il est indispensable que la base de données utilisée à cette étape contienne des angles de carrossage et des pressions représentatives des conditions d'utilisation futures.

Dans un second temps, on recherche une fonction de transfert à l'aide de cette base de données, μ étant la sortie de la fonction de transfert. Dans le cas où on utilise un réseau de neurones, c'est la phase d'apprentissage.

La troisième étape consiste à vérifier que la fonction de transfert obtenue fonctionne correctement dans tout le domaine désiré, c'est à dire à vérifier qu'elle est généralisable.

Dans tous les cas, la méthode proposée pour estimer le coefficient d'adhérence maxi nécessite de solliciter le pneu par des efforts Fx, Fy ou les deux combinés. En effet, il est absolument nécessaire qu'il existe une zone de glissement dans l'aire de contact pour que la démarche présentée s'applique. Grâce à cette méthode, on est certain d'avoir une estimation de la limite d'adhérence avant de l'atteindre. Toutefois, lorsque le pneu est très peu sollicité, l'estimation est imprécise ou fausse (absence de glissement de l'aire de contact). Pour cette raison, il est proposé de s'intéresser au pourcentage de potentiel d'adhérence utilisé défini de la façon suivante :

$$p_u = \frac{\mu_{utilisé}}{\mu} = \frac{\sqrt{F_x^2 + F_y^2}}{\mu . F_z}$$

L'approche proposée ici consiste à déterminer directement le pourcentage pu à partir des mesures d'extension circonférentielle. Comme pour la détermination de $\mu$, on peut procéder de la façon suivante :

La première étape consiste à réaliser une base de données contenant les valeurs des extensions circonférentielles aux azimuts choisis (ou toute valeur représentative) qui représenteront les entrées de la fonction de transfert, et contenant $p_u$ (sortie de la fonction de transfert) pour un ensemble de sollicitations. Il est possible de construire une telle base de données soit à l'aide d'une machine de mesure (l'avantage est de pouvoir solliciter le pneu par des forces Fx, Fy, Fz indépendantes et de faire varier le coefficient d'adhérence) soit sur véhicule en utilisant par exemple une roue dynamométrique (pour mesurer les efforts) et en roulant sur différents sols.

Dans un second temps, on recherche une fonction de transfert à l'aide de cette base de données, pu étant la sortie de la fonction de transfert. Dans le cas où on utilise un réseau de neurones, c'est la phase d'apprentissage.

La troisième étape consiste à vérifier que la fonction de transfert obtenue fonctionne correctement dans tout le domaine désiré, c'est à dire à vérifier qu'elle est généralisable.

Le pourcentage proposé présente l'intérêt d'être plus facilement correctement estimé en grandeur absolue quelle que soit la sollicitation, même faible, appliquée au pneu. On l'obtient de manière directe par exemple par un réseau de neurones en appliquant la démarche présentée pour l'estimation de $\mu$. La figure 16 présente un exemple de reconstruction du potentiel d'adhérence maxi et du pourcentage de potentiel utilisé. Le couple moteur ou freineur (glissement lié à Fx) et la force transversale (dérive liée à Fy) imposée. Lorsque la sollicitation du pneu est faible (Fx et Fy faibles simultanément) au voisinage de 4 s, la qualité de l'estimation du potentiel d'adhérence maxi chute. L'estimation du pourcentage de potentiel utilisé reste quant à elle tout à fait correcte.

Dans le cadre d'une utilisation par un système embarqué dans un véhicule (système de type ESP ou ABS), il est intéressant de disposer d'une grandeur définie sur tout le domaine d'utilisation. Il est par exemple envisageable d'utiliser le pourcentage de potentiel d'adhérence utilisé pour affiner les mécanismes de régulation des systèmes ABS ou ESP.

## Revendications

**1.** Méthode de détermination du coefficient d'adhérence $\mu$ dans l'aire de contact d'un pneu sur une chaussée, **caractérisée en ce qu'**on sélectionne plusieurs points fixes dans l'espace, c'est à dire fixes dans le repère lié au véhicule, situés à des azimuts différents le long de la circonférence dans au moins un flanc du pneu, on effectue autant de mesures de variation de distance circonférentielle à ces points fixes lorsque le pneu roule sur la chaussée et l'on traite les signaux de mesure de façon à en extraire ledit coefficient d'adhérence $\mu$.

**2.** Méthode selon la revendication 1, **caractérisée en ce que** ledit coefficient d'adhérence $\mu$ est déduit d'au moins 5 mesures de variation de distance circonférentielle effectuées dans au moins un flanc du pneu, en 5 points fixes dans l'espace, c'est à dire fixes dans le repère lié au véhicule, situés à des azimuts différents le long de la circonférence.

**3.** Méthode selon la revendication 1 ou 2, **caractérisée en ce que** la mesure de la variation circonférentielle est effectuée par au moins un capteur intégré dans un flanc du pneu, le signal délivré par ledit capteur étant traité pour relever sa valeur en plusieurs azimuts correspondant auxdits points fixes.

**4.** Méthode selon la revendication 1 ou 2, **caractérisée en ce que** la mesure de la variation circonférentielle est effectuée par autant de capteurs que d'azimuts à observer, les capteurs étant externes au pneu et disposés dans l'espace fixe.

**5.** Méthode selon l'une des revendications 1 à 4, **caractérisée en ce que** l'on effectue une mesure en trois azimuts sur chacun des deux flancs, à un azimut choisi en entrée d'aire de contact, à 180° et à un azimut choisi en sortie d'aire de contact, azimut symétrique de celui utilisé en entrée.

**6.** Méthode selon l'une des revendications 1 à 5, **caractérisée en ce** l'on effectue une mesure en sept azimuts sur un seul flanc, les trois premiers azimuts étant situés en entrée d'aire de contact, le quatrième à 180° au centre de l'aire de contact et les trois derniers symétriques des trois premiers par rapport au centre de l'aire de contact.

**7.** Méthode selon l'une des revendications 1 à 6, **caractérisée en ce que** l'on établit une fonction de transfert entre les mesures et le coefficient d'adhérence maxi par les étapes suivantes :

• réaliser une base de données contenant les valeurs des variations circonférentielles aux azimuts choisis, et les valeurs de $\mu$ associées, l'ensemble des valeurs étant relevées expérimentalement.
• rechercher une fonction de transfert à l'aide de cette base de données, μ étant la sortie de la fonction de transfert.

8. Méthode selon la revendication 7, utilisant un réseau de neurones du type perceptron à une couche cachée, utilisé en tant qu'approximateur.

9. Méthode selon l'une des revendications 1 à 8, **caractérisée en ce que** l'on estime la variation circonférentielle par la mesure de la distance entre les fils de la nappe carcasse dans les flancs.

10. Méthode selon l'une des revendications 1 à 8, **caractérisée en ce que** l'on estime la variation circonférentielle par la mesure de la distance entre des fils formant un capteur mesurant une variation de capacité liée à la distance qui sépare deux électrodes.

11. Méthode selon l'une des revendications 1 à 10, **caractérisée en ce que** l'on détermine le pourcentage de potentiel d'adhérence utilisé défini par

$$p_u = \frac{\mu_{utilisé}}{\mu} = \frac{\sqrt{F_x^2 + F_y^2}}{\mu.F_z}$$ en procédant de la façon suivante :

  • réaliser une base de données contenant les valeurs des extensions circonférentielles aux azimuts choisis, pour un ensemble de sollicitations du pneu,
  • rechercher une fonction de transfert à l'aide de cette base de données, pu étant la sortie de la fonction de transfert, les valeurs des extensions circonférentielles étant les entrées de la fonction de transfert,
  • vérifier que la fonction de transfert obtenue fonctionne correctement dans tout le domaine de sollicitations désiré.

**Patentansprüche**

1. Verfahren zur Bestimmung des Haftungskoeffizienten μ in der Kontaktfläche eines Luftreifens auf einer Fahrbahn, **dadurch gekennzeichnet, dass** man mehrere raumfeste, d.h. im mit dem Fahrzeug verbundenen Koordinatensystem ortsfeste Punkte auswählt, die sich in unterschiedlichen Azimutwinkeln entlang des Umfangs in mindestens einer Flanke des Luftreifens befinden, dass man ebenso viele Messungen der Veränderung der Umfangsstrecke an diesen ortsfesten Punkten durchführt, wenn der Luftreifen auf der Fahrbahn rollt, und dass man die Messsignale so verarbeitet, dass daraus der Haftungskoeffizient μ extrahiert wird.

2. Verfahren nach Anspruch 1, **dadurch gekenn-** zeichnet, dass** der Haftungskoeffizient μ aus mindestens 5 Messungen der Veränderung der Umfangsstrecke abgeleitet wird, die in mindestens einer Flanke des Luftreifens an 5 raumfesten, d.h. im mit dem Fahrzeug verbundenen Koordinatensystem ortsfesten Punkten durchgeführten werden, die sich in unterschiedlichen Azimutwinkeln entlang des Umfangs befinden.

3. Verfahren nach Anspruch 1 oder 2, **dadurch gekennzeichnet, dass** die Messung der Umfangsveränderung von mindestens einem in eine Flanke des Luftreifens integrierten Sensor durchgeführt wird, wobei das vom Sensor gelieferte Signal verarbeitet wird, um seinen Wert in mehreren Azimutwinkeln entsprechend den ortsfesten Punkten festzustellen.

4. Verfahren nach Anspruch 1 oder 2, **dadurch gekennzeichnet, dass** die Messung der Umfangsveränderung durch ebenso viele Sensoren durchgeführt wird, wie es zu beobachtende Azimutwinkel gibt, wobei die Sensoren außerhalb des Luftreifens liegen und im ortsfesten Raum angeordnet sind.

5. Verfahren nach einem der Ansprüche 1 bis 4, **dadurch gekennzeichnet, dass** eine Messung in drei Azimutwinkeln auf jeder der beiden Flanken, einem ausgewählten Azimutwinkel am Eingang der Kontaktfläche, bei 180°, und einem ausgewählten Azimutwinkel am Ausgang der Kontaktfläche, durchgeführt wird, wobei dieser Azimutwinkel symmetrisch zu dem am Eingang verwendeten ist.

6. Verfahren nach einem der Ansprüche 1 bis 5, **dadurch gekennzeichnet, dass** man eine Messung in sieben Azimutwinkeln an einer einzigen Flanke durchführt, wobei die drei ersten Azimutwinkel sich am Eingang der Kontaktfläche und der vierte sich bei 180° in der Mitte der Kontaktfläche befinden, und die drei letzten bezüglich der Mitte der Kontaktfläche symmetrisch zu den drei ersten sind.

7. Verfahren nach einem der Ansprüche 1 bis 6, **dadurch gekennzeichnet, dass** man eine Übertragungsfunktion zwischen den Messungen und dem maximalen Haftungskoeffizienten durch die folgenden Schritte erstellt:

  • Herstellen einer Datenbasis, die die Werte der Umfangsveränderungen in den gewählten Azimutwinkeln und die zugeordneten Werte von μ enthält, wobei die Gesamtheit der Werte experimentell festgestellt werden,
  • Suche einer Übertragungsfunktion mit Hilfe dieser Datenbasis, wobei μ der Ausgangswert der Übertragungsfunktion ist.

8. Verfahren nach Anspruch 7, das ein Neuronennetz vom Typ Perzeptron mit einer versteckten Schicht verwendet, das als Approximator verwendet wird.

9. Verfahren nach einem der Ansprüche 1 bis 8, **dadurch gekennzeichnet, dass** die Umfangsveränderung durch die Messung der Entfernung zwischen den Corden der Karkassenlage in den Flanken geschätzt wird.

10. Verfahren nach einem der Ansprüche 1 bis 8, **dadurch gekennzeichnet, dass** die Umfangsveränderung durch die Messung der Entfernung zwischen einen Sensor bildenden Drähten geschätzt wird, wobei der Sensor eine Kapazitätsveränderung misst, die mit der zwei Elektroden trennenden Entfernung verbunden ist.

11. Verfahren nach einem der Ansprüche 1 bis 10, **dadurch gekennzeichnet, dass** man den genutzten Haftungspotentialanteil bestimmt, der definiert wird durch

$$p_u = \frac{\mu_{\text{genutzt}}}{\mu} = \frac{\sqrt{F_x^2 + F_y^2}}{\mu.F_z}$$

indem man folgendermaßen vorgeht:

• Herstellen einer Datenbasis, die die Werte der Umfangsausdehnungen in den gewählten Azimutwinkeln für eine Gesamtheit von Beanspruchungen des Luftreifens enthält,
• Suche einer Übertragungsfunktion mit Hilfe dieser Datenbasis, wobei pu der Ausgangswert der Übertragungsfunktion ist, wobei die Werte der Umfangsausdehnungen die Eingänge der Übertragungsfunktion sind,
• Prüfen, ob die erhaltene Übertragungsfunktion im ganzen gewünschten Beanspruchungsbereich korrekt arbeitet.

**Claims**

1. Method of determining the grip coefficient $\mu$ in the contact area of a tyre on a road, **characterised in that** a plurality of fixed points in space, that is to say ones that are fixed in the reference frame associated with the vehicle, are selected which lie at different azimuths along the circumference in at least one sidewall of the tyre, a corresponding number of measurements of circumferential distance variation are carried out at these fixed points when the tyre is rolling on the road, and the measurement signals are processed so as to extract the said grip coefficient $\mu$ from them.

2. Method according to Claim 1, **characterised in that** the said grip coefficient $\mu$ is derived from at least 5 measurements of circumferential distance variation carried out in at least one sidewall of the tyre, at 5 fixed points in space, that is to say ones that are fixed in the reference frame associated with the vehicle, which lie at different azimuths along the circumference.

3. Method according to Claim 1 or 2, **characterised in that** the measurement of the circumferential variation is carried out by at least one sensor integrated in a sidewall of the tyre, the signal delivered by the said sensor being processed in order to acquire its value at a plurality of azimuths corresponding to the said fixed points.

4. Method according to Claim 1 or 2, **characterised in that** the measurement of the circumferential variation is carried out by as many sensors as there are azimuths to be observed, the sensors being external to the tyre and arranged in fixed space.

5. Method according to one of Claims 1 to 4, **characterised in that** a measurement is carried out at three azimuths on each of the two sidewalls, at an azimuth selected at the entry of the contact area, at 180° and at an azimuth selected at the exit of the contact area, the latter azimuth being symmetrical to the one used at the entry.

6. Method according to one of Claims 1 to 5, **characterised in that** a measurement is carried out at seven azimuths on a single sidewall, the first three azimuths lying at the entry of the contact area, the fourth at 180° at the centre of the contact area and the last three being symmetrical to the first three with respect to the centre of the contact area.

7. Method according to one of Claims 1 to 6, **characterised in that** a transfer function is established between the measurements and the maximum grip coefficient by the following steps:

• compiling a data base containing the values of the circumferential variations at the selected azimuths, and the associated values of $\mu$, all the values being acquired experimentally.
• seeking a transfer function with the aid of this data base, $\mu$ being the output of the transfer function.

8. Method according to Claim 7, using a neural network of the perceptron type with a hidden layer used as an approximator.

9. Method according to one of Claims 1 to 8, **characterised in that** the circumferential variation is estimated by measuring the distance between the threads of the carcass ply in the sidewalls.

10. Method according to one of Claims 1 to 8, **characterised in that** the circumferential variation is estimated by measuring the distance between wires forming a sensor which measures a variation in capacitance linked with the distance separating two electrodes.

11. Method according to one of Claims 1 to 10, **characterised in that** the percentage grip potential used, defined by $p_u = \dfrac{\mu_{used}}{\mu} = \dfrac{\sqrt{F_x^2 + F_y^2}}{\mu.F_z}$, is determined by adopting the following procedure:

  • compiling a data base containing the values of the circumferential extensions at the selected azimuths, for a set of constraints of the tyre,
  • seeking a transfer function with the aid of this data base, $p_u$ being the output of the transfer function, the values of the circumferential extensions being the inputs of the transfer function,
  • checking that the transfer function which is obtained works correctly throughout the desired range of constraints

Figure 1

Distance entre les points $A_1$ et $A_2$

**Figure 2a**

Distance entre les points $B_1$ et $B_2$

**Figure 2b**

Distance entre les points A₁ et A₂

**Figure 3a**

Distance entre les points B₁ et B₂

**Figure 3b**

Distance entre les points A₁ et A₂

Distance
(mm)

Azimut (Deg)

**Figure 4a**

Distance entre les points B₁ et B₂

Distance
(mm)

Azimut (Deg)

**Figure 4b**

Figure 5

Distance entre les points $A_1$ et $A_2$

Figure 6a

Distance entre les points $B_1$ et $B_2$

Figure 6b

Figure 7

**Figure 8**

Y

Contrainte latérale

$G_1$

Position dans l'aire de contact

**Figure 9**

Contrainte latérale

$\mu_1.\sigma_z$

$\mu_2.\sigma_z$

$G_2$          $G_1$

Position dans l'aire de contact

**Figure 10**

18

| Mesures réalisées sur le pneu (déformations, contraintes ...) | Efforts globaux $F_x$, $F_y$, $F_z$, N | Coefficient d'adhérence $\mu$ |

**Figure 11**

90    180    270
Figure 12a

90    180    270
Figure 12b

90    180    270
Figure 12c

V2-V1

V1+V2

Figure 13

Entrées      Couche       Couche
             cachée       de sortie

Sigmoïde

$V_1$

Sigmoïde

$V_2$

Sigmoïde      Linéaire      →      $\mu$

....

Sigmoïde

$V_n$

Sigmoïde

Figure 14

Entrées      Couche       Couche
             cachée       de sortie

Sigmoïde

$V_1$

Sigmoïde

$V_2$

Sigmoïde      Linéaire      →      $\mu$

....

Sigmoïde

$V_n$

Sigmoïde

P

Figure 15

**Figure 16**